# EUROPEAN PATENT APPLICATION

(11) **EP 4 482 002 A1**
(43) Date of publication of application: **25.12.2024**
(21) Application number: 22927034.3
(22) Date of filing: 16.02.2022
(51) Int. Cl.: H02K 15/03, H02K 1/278

(54) **PERMANENT MAGNET ROTOR AND METHOD FOR MANUFACTURING PERMANENT MAGNET ROTOR**

(71) Applicant: MITSUBISHI ELECTRIC CORPORATION, Chiyoda-ku Tokyo 100-8310 (JP)
(72) Inventor: OKADA, Junji, Tokyo 100-8310 (JP); NAKAMURA, Takuya, Tokyo 100-8310 (JP); NISHIBU, Motoaki, Tokyo 100-8310 (JP); OHASHI, Yuichiro, Tokyo 100-8310 (JP); TATEBE, Akiko, Tokyo 100-8310 (JP)
(74) Representative: Mewburn Ellis LLP
(86) International application number: PCT/JP2022/006198
(87) International publication number: WO 2023/157131

(57) **Abstract**

A permanent magnet rotor (10) includes a rotation axis (1), an inner peripheral magnet (2) that is a cylindrical bonded magnet including a plurality of recesses (24) on an outer peripheral side and holding the rotation axis (1), and an outer peripheral magnet (3) that is a cylindrical bonded magnet provided on the outer periphery side of the inner peripheral magnet (2). The outer peripheral magnet (3) includes a plurality of projections (31) that projects toward an inner peripheral side and is fitted into the plurality of recesses (24) of the inner peripheral magnet (2) .

## Description

### Field

The present disclosure relates to a permanent magnet rotor and a method of manufacturing the permanent magnet rotor.

### Background

A bonded magnet can be manufactured by injection-molding similarly to general resin materials. Therefore, it is possible to easily manufacture a permanent magnet rotor using the bonded magnet, and for example, the permanent magnet rotor is widely adopted as a permanent magnet rotor for an air conditioner fan motor. In order to meet a recent demand for energy saving, there is a strong demand for increasing a magnetic force of a magnet, and a ferrite bonded magnet is used in general. However, a rare earth bonded magnet may be used. However, a material of the rare earth bonded magnet is expensive.

Patent Literature 1 adopts a two-layer structure permanent magnet rotor that includes a ferrite bonded magnet on an inner peripheral side and a rare earth magnetic bonded magnet on an outer peripheral side, and both of performance and cost are achieved.

### Citation List

### Patent Literature

Patent Literature 1: Japanese Patent Application Laid-open No. 2005-151757

### Summary of Invention

### Problem to be solved by the Invention

However, Patent Literature 1 has a problem in that, because materials of the inner peripheral side and the outer peripheral side are different materials, bonding strength between the inner peripheral side bonded magnet and the outer peripheral side bonded magnet is weak.

The present disclosure has been made in view of the above, and an object of the present disclosure is to obtain a permanent magnet rotor that improves bonding strength between an inner peripheral magnet and an outer peripheral magnet.

### Means to Solve the Problem

In order to solve the above problems and to achieve the object, a permanent magnet rotor according to the present disclosure includes: a rotation axis; an inner peripheral magnet that is a cylindrical bonded magnet including a plurality of recesses on an outer peripheral side and holding the rotation axis; and an outer peripheral magnet that is a cylindrical bonded magnet provided on an outer peripheral side of the inner peripheral magnet. The outer peripheral magnet includes a plurality of projections that projects toward an inner peripheral side and is fitted into the plurality of recesses of the inner peripheral magnet.

### Effects of the Invention

According to a permanent magnet rotor according to the present disclosure, an effect is achieved such that bonding strength between an inner peripheral magnet and an outer peripheral magnet can be improved.

### Brief Description of Drawings

FIG. 1 is a perspective view illustrating a configuration of a permanent magnet rotor according to a first embodiment.
FIG. 2 is a side view illustrating the configuration of the permanent magnet rotor according to the first embodiment.
FIG. 3 is a top view illustrating the configuration of the permanent magnet rotor according to the first embodiment.
FIG. 4 is a cross-sectional diagram illustrating the configuration of the permanent magnet rotor according to the first embodiment and is a cross-sectional diagram in the direction of a IV-IV line in FIG. 2.
FIG. 5 is a perspective view illustrating a configuration of an inner peripheral magnet of the permanent magnet rotor according to the first embodiment.
FIG. 6 is a perspective view illustrating a configuration of an outer peripheral magnet of the permanent magnet rotor according to the first embodiment.
FIG. 7 is a top view illustrating a positional relationship between magnetic lines of magnetic field orientation, gate connection portions, and weld lines of the permanent magnet rotor according to the first embodiment.
FIG. 8 is a partially enlarged plan view for describing dimensions of the permanent magnet rotor according to the first embodiment.
FIG. 9 is a partially enlarged cross-sectional diagram for describing the dimensions of the permanent magnet rotor according to the first embodiment.
FIG. 10 is a schematic plan view illustrating a positional relationship between the permanent magnet rotor and a second magnetic field orientation mold according to the first embodiment.
FIG. 11 is a plan view illustrating a positional relationship between gate connection portions, magnetic pole centers, and weld lines of a magnet portion of the permanent magnet rotor according to the first embodiment.
FIG. 12 is a plan view illustrating another positional relationship between the gate connection portions, the magnetic pole centers, and the weld lines of the magnet portion of the permanent magnet rotor according to the first embodiment.
FIG. 13 is a cross-sectional diagram illustrating a state where a mold of the gate connection portion of the permanent magnet rotor according to the first embodiment is assembled.
FIG. 14 is a cross-sectional diagram illustrating a state where the mold of the gate connection portion of the permanent magnet rotor according to the first embodiment is removed.
FIG. 15 is a process diagram illustrating a process of manufacturing a permanent magnet rotor according to a second embodiment.
FIG. 16 is a cross-sectional diagram illustrating a state where a first mold used in the manufacturing process in the second embodiment is disassembled.
FIG. 17 is a plan view illustrating a first magnetic field orientation mold of the first mold according to the second embodiment.
FIG. 18 is a cross-sectional diagram illustrating a state where the first mold used in the manufacturing process in the second embodiment is assembled.
FIG. 19 is a cross-sectional diagram illustrating an inner peripheral magnet manufactured by the first mold according to the second embodiment.
FIG. 20 is a cross-sectional diagram illustrating a state where a second mold used in the manufacturing process in the second embodiment is disassembled.
FIG. 21 is a cross-sectional diagram illustrating a state where the second mold used in the manufacturing process in the second embodiment is assembled.
FIG. 22 is a cross-sectional diagram illustrating an outer peripheral magnet manufactured by the second mold according to the second embodiment.

### Description of Embodiments

Hereinafter, a permanent magnet rotor and a method of manufacturing the permanent magnet rotor according to embodiments will be described in detail with reference to the drawings.

### First Embodiment.

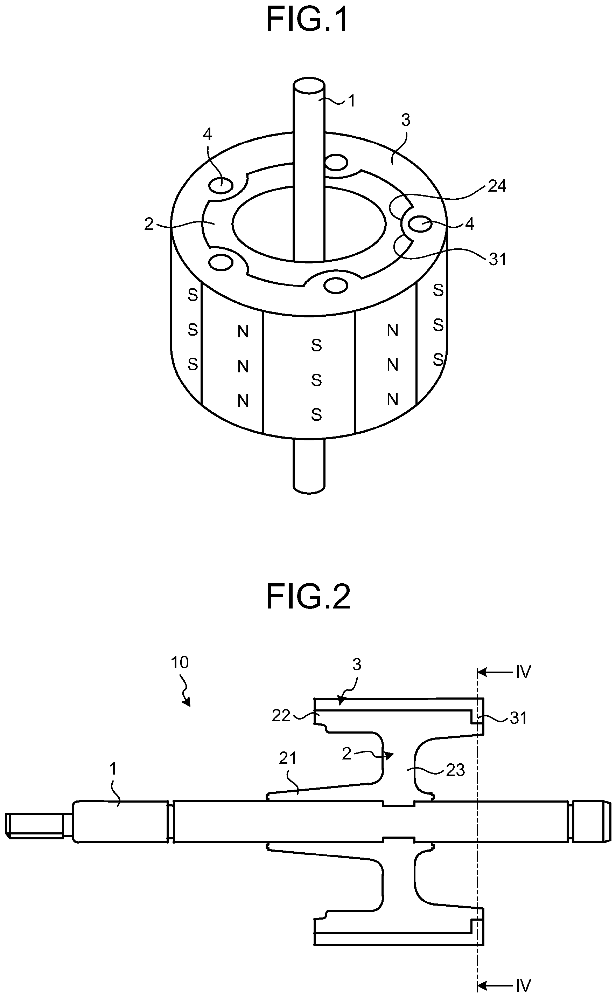

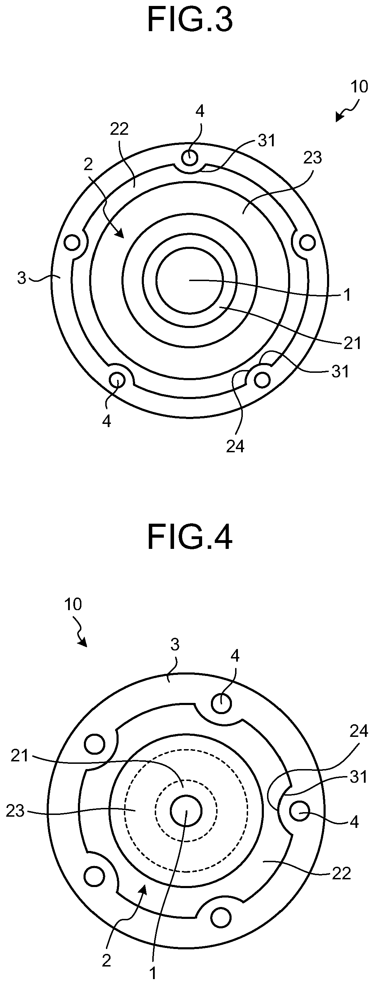

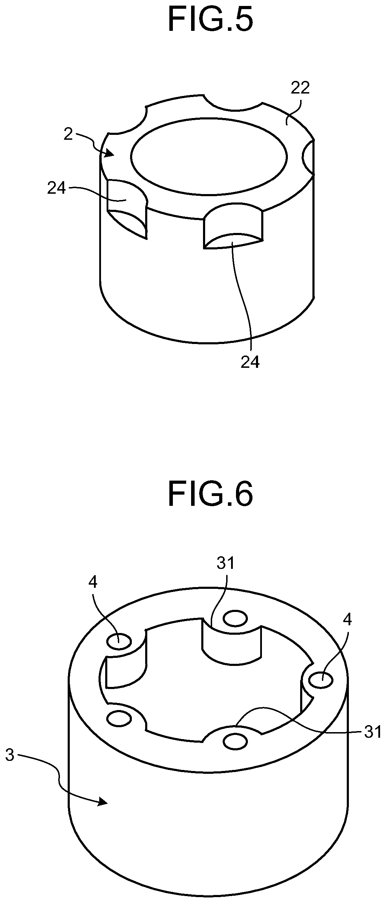

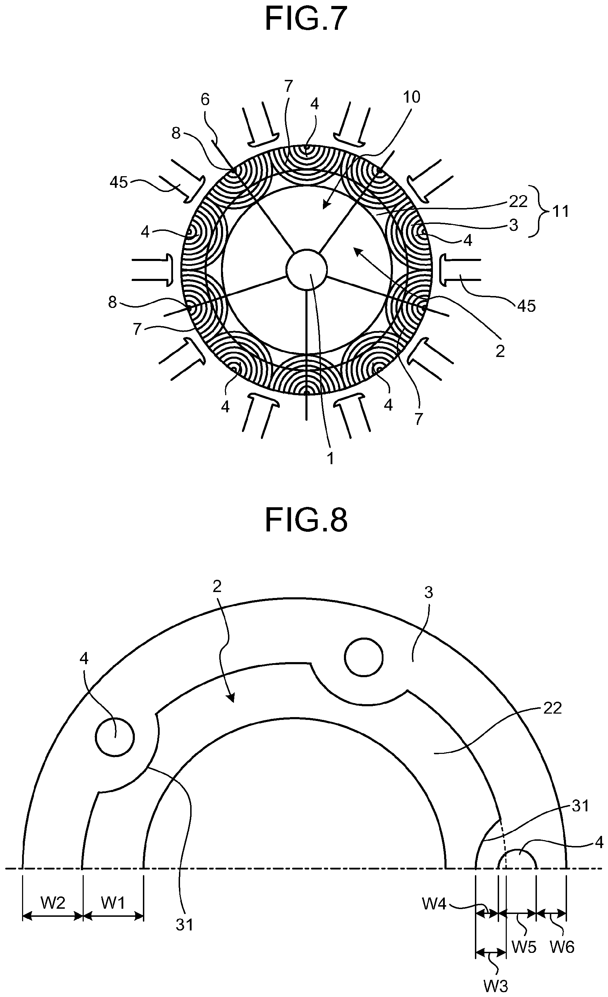

FIG. 1 is a perspective view illustrating a configuration of a permanent magnet rotor according to a first embodiment. FIG. 2 is a side view illustrating the configuration of the permanent magnet rotor according to the first embodiment. FIG. 3 is a top view illustrating the configuration of the permanent magnet rotor according to the first embodiment. FIG. 4 is a cross-sectional diagram illustrating the configuration of the permanent magnet rotor according to the first embodiment and is a cross-sectional diagram in the direction of a IV-IV line in FIG. 2. FIG. 5 is a perspective view illustrating a configuration of an inner peripheral magnet of the permanent magnet rotor according to the first embodiment. FIG. 6 is a perspective view illustrating a configuration of an outer peripheral magnet of the permanent magnet rotor according to the first embodiment. FIG. 7 is a top view illustrating a positional relationship between magnetic lines of magnetic field orientation, gate connection portions, and weld lines of the permanent magnet rotor according to the first embodiment.

As illustrated in FIGs. 1 to 6, a permanent magnet rotor 10 includes a rotation axis 1, an inner peripheral magnet 2, and an outer peripheral magnet 3.

The inner peripheral magnet 2 includes an axis holding portion 21, on an inner peripheral side, for holding the rotation axis 1, a cylindrical magnetic force portion 22 on an outer peripheral side, and a connection portion 23 that connects the magnetic force portion 22 and the axis holding portion 21. As illustrated in FIG. 5, at one end portion of the magnetic force portion 22 in an axial direction, a plurality of semicircular recesses 24, recessed from an outer edge side to the inner peripheral side, is provided. In the first embodiment, since the number of magnetic poles of the permanent magnet rotor 10 is 10, the five recesses 24 that is a half of the number of magnetic poles are provided and arranged in a circumferential direction at equal intervals. A cross section of the recess 24 cut perpendicularly in the axial direction has a semicircular shape. The five recesses 24 have the same shape and are provided at only one end portion of the magnetic force portion 22 in the axial direction.

The outer peripheral magnet 3 has a cylindrical shape. The outer peripheral magnet 3 includes a plurality of gate connection portions 4 and a plurality of semicircular projections 31 provided on an inner peripheral side of the gate connection portion 4. The gate connection portion 4 is connected to a gate that is an inlet of a resin in an injection molding machine. As illustrated in FIG. 6, the semicircular projection 31 that projects toward the inner peripheral side is provided only at the one end portion of the outer peripheral magnet 3 in the axial direction. The plurality of semicircular projections 31 is fitted into the plurality of semicircular recesses 24 of the inner peripheral magnet 2.

The inner peripheral magnet 2 and the outer peripheral magnet 3 are bonded magnets and are formed by insert injection molding with in-mold magnetic field orientation. The magnetic force portion 22 of the inner peripheral magnet 2 and the outer peripheral magnet 3 form a magnet portion 11 that functions as a magnet of the permanent magnet rotor 10. Magnetic field orientations of the inner peripheral magnet 2 and the outer peripheral magnet 3 are the same, and magnetic poles of the inner peripheral magnet 2 and the outer peripheral magnet 3 are the same. A method of manufacturing the inner peripheral magnet 2 and the outer peripheral magnet 3 will be described in a second embodiment.

FIG. 7 illustrates a state where the permanent magnet rotor 10 is arranged in a magnetic field orientation mold. Around the permanent magnet rotor 10, a plurality of tooth portions 45 of the magnetic field orientation mold is illustrated. A magnetic field orientation magnet (not illustrated) is arranged between the tooth portions 45, and an outer peripheral yoke (not illustrated) is arranged on an outer peripheral side of the tooth portion 45. FIG. 7 illustrates concentric magnetic lines 7 of the permanent magnet rotor 10 formed on the magnet portion 11 of the permanent magnet rotor 10 in the magnetic field orientation mold. Note that, in FIG. 7, it is difficult to visually recognize the projection 31 of the outer peripheral magnet 3, the recess 24 of the inner peripheral magnet 2, and the gate connection portion 4 due to overlap with the concentric magnetic lines 7, the illustration of the projection 31 of the outer peripheral magnet 3, the recess 24 of the inner peripheral magnet 2, and the gate connection portion 4 is omitted. A circular shape of the gate connection portion 4 is not illustrated, and only a reference character "4" is illustrated.

As illustrated in FIG. 7, in the first embodiment, the number of magnetic poles of the permanent magnet rotor 10 is 10. Since the number of poles is 10, the magnetic lines 7 are generated at 10 locations. The gate connection portions 4 are provided at five locations at equal intervals and at intermediate positions of the plurality of tooth portions 45. As illustrated in FIGs. 1, 3, or the like, the projection 31 is provided on the inner peripheral side of the gate connection portion 4. The weld line 6 is positioned in the middle of the gate connection portions 4. An inter-pole 8 that is an intermediate position between adjacent magnetic poles is magnetically oriented to be the same position as the weld line 6.

Next, the semicircular projection 31 of the outer peripheral magnet 3 and the semicircular recess 24 of the inner peripheral magnet 2 will be described in detail. The outer peripheral magnet 3 is insert injection molded so as to fill the recess 24 of the inner peripheral magnet 2. In the permanent magnet rotor 10 according to the first embodiment, the projection 31 of the outer peripheral magnet 3 is fitted into the recess 24 of the inner peripheral magnet 2. Therefore, it is possible to improve bonding strength between the inner peripheral magnet 2 and the outer peripheral magnet 3 in a rotation direction. Furthermore, since the projection 31 and the recess 24 are fitted at the end portions in the axial direction, tensile strength between the inner peripheral magnet 2 and the outer peripheral magnet 3 in the axial direction can be improved.

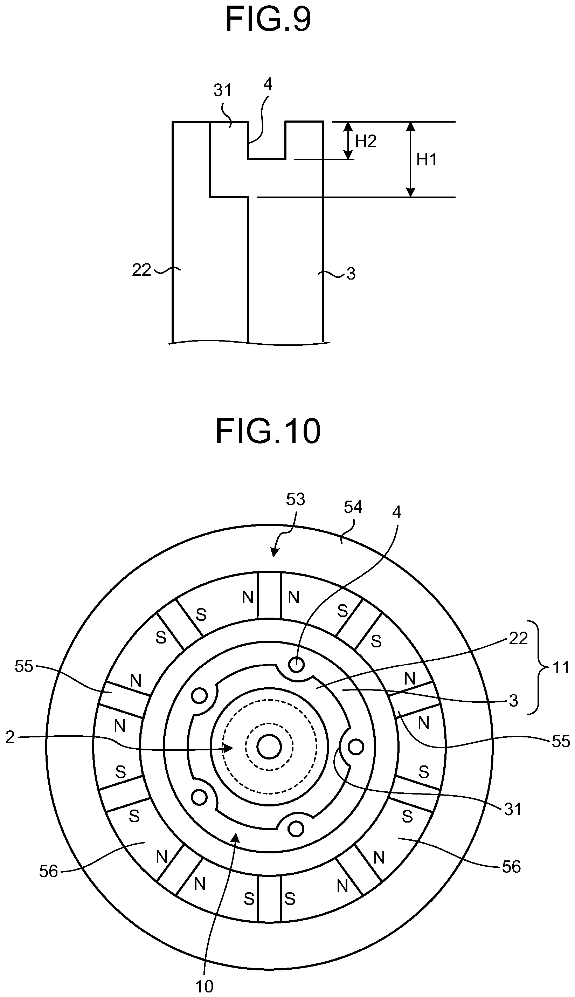

Dimensions of the projection 31 of the outer peripheral magnet 3 or the like will be described with reference to FIGs. 8 and 9. FIG. 8 is a partially enlarged plan view for describing dimensions of the permanent magnet rotor 10 according to the first embodiment. FIG. 9 is a partially enlarged cross-sectional diagram for describing the dimensions of the permanent magnet rotor 10 according to the first embodiment. A thickness of the magnetic force portion 22 of the inner peripheral magnet 2 in a radial direction is set to W1. A thickness of the outer peripheral magnet 3 in the radial direction is set to W2. A length of the projection 31 in the radial direction is set to W3. The reference character "W3" represents a projection length of the outer peripheral magnet 3 from an inner peripheral surface in the radial direction. A diameter of the gate connection portion 4 that is a circular recess is set to W5. A width between an outer periphery of the gate connection portion 4 and an outer periphery of the outer peripheral magnet 3 is set to W6. A width between an inner periphery of the gate connection portion 4 and a protrusion of the projection 31 is set to W4. A height of the projection 31 in the axial direction is set to H1. A depth of the gate connection portion 4 that is a recess is set to H2. W2+W3=W4+W5+W6 is satisfied. The thickness W1 of the magnetic force portion 22 is about the same as the thickness W2 of the outer peripheral magnet 3. That is, W1≈W2.

The height W3 of the projection 31 in the radial direction is desirably about a half of the thickness W1 of the magnetic force portion 22. That is, W3≈W1/2. As a result, since a thickness of about W1/2 remains at the position of the projection 31 in the magnetic force portion 22 of the inner peripheral magnet 2, which is desirable in terms of strength.

The length H1 of the projection 31 in the axial direction is desirably about the same as the thickness W2 of the outer peripheral magnet 3. That is, H1≈W2. A magnetic resin material forming the outer peripheral magnet 3 is injected from the gate connection portion 4 through the projection 31. By setting the height H1 of the projection 31 in the axial direction to be about the same as the thickness W2 of the outer peripheral magnet 3, it is possible to suppress a pressure loss at the time of resin injection.

The depth H2 of the gate connection portion 4 is desirably about a half of the height H1 of the projection 31 in the axial direction. That is, H2≈H1/2. In this way, it is possible to efficiently and appropriately inject the resin material.

It is sufficient that the diameter W5 of the gate connection portion 4 be about 1/2 or 1/4 of W2+W3 that is the width of the outer peripheral magnet 3 in the radial direction at the position of the projection 31. That is, (W2+W3)/4≤W5≤(W2+W3)/2.

It is sufficient that the widths W6 and W4 be a width that allows the resin to sufficiently flow. For this purpose, it is sufficient that the widths W6 and W4 be about 1/2 to 1/5 of W2+W3 that is the width of the outer peripheral magnet 3 in the radial direction at the position of the projection 31. That is, (W2+W3)/5≤W4≤(W2+W3)/2 and (W2+W3)/5≤W6≤(W2+W3)/2.

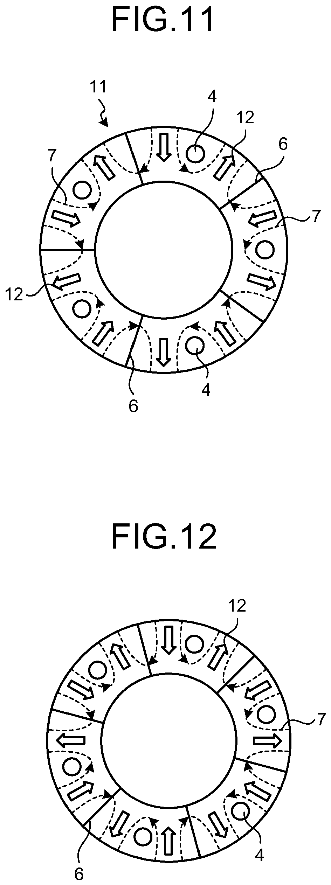

Next, the positions of the projections 31 in the circumferential direction will be described with reference to FIGs. 10 and 11. FIG. 10 is a schematic plan view illustrating a positional relationship between the permanent magnet rotor 10 and a second magnetic field orientation mold 53 according to the first embodiment. FIG. 11 is a plan view illustrating a positional relationship between the gate connection portions 4, a magnetic pole centers 12, and the weld lines 6 of the magnet portion 11 of the permanent magnet rotor 10 according to the first embodiment. The second magnetic field orientation mold 53 is a mold for insert resin molding and magnetizing the outer peripheral magnet 3. The second magnetic field orientation mold 53 includes a cylindrical outer peripheral yoke 54, a plurality of tooth portions 55, and a plurality of magnetic field orientation magnets 56. The plurality of tooth portions 55 extends from the outer peripheral yoke 54 toward an inner periphery and is evenly arranged in the circumferential direction. The plurality of magnetic field orientation magnets 56 is arranged between the adjacent tooth portions 55. The magnetic field orientation magnet 56 is arranged such that an NS pole direction is oriented to the circumferential direction, and the adjacent magnetic field orientation magnets 56 are alternately arranged such that the N poles face each other and S poles face each other. By arranging the magnetic field orientation magnets 56 in this way, the N pole and the S pole are formed in the adjacent tooth portions 55, and a magnetic field is formed from the adjacent tooth portions 55 toward the magnet portion 11 in a direction of the magnetic line 7.

The five projections 31 of the outer peripheral magnet 3 are arranged in the middle of the adjacent tooth portions 55 of the second magnetic field orientation mold 53. That is, since the magnetic pole center 12 is formed in a portion facing each tooth portion 55 in the magnet portion 11 by the magnetic field orientation by the second magnetic field orientation mold 53, each projection 31 is arranged in the middle of the adjacent magnetic pole centers 12 in the magnet portion 11. The magnetic pole center 12 is a center position of the magnetic pole.

Since the portion of the projection 31 in the outer peripheral magnet 3 has a wide width in a radial direction, the gate connection portion 4 can be easily provided in the portion of the projection 31. The gate connection portion 4 is desirably provided at a center portion of the portion of the projection 31.

At the time of injection-molding, since the magnetic resin materials are simultaneously injected from the plurality of gate connection portions 4 provided in the portions of the projections 31, the magnetic resin materials merge at the intermediate position between the adjacent projections 31, and the plurality of weld lines 6 is formed. In the first embodiment, the five weld lines 6 are formed at the intermediate positions of the five gate connection portions 4 adjacent to each other in the circumferential direction.

Here, at a position of the weld line 6 that is a merging portion of the injection molding resin materials, orientation of the materials collapses by merging. When the orientation of the materials collapses, the magnetic force is weakened, and the magnetic force varies. The magnetic force of the magnetic pole center 12 is important for rotation of a rotor. In the first embodiment, since the magnetic pole center 12 is formed so that the magnetic pole center 12 does not overlap the weld line 6, an effect of the orientation variation of the resin merging portion on the magnetic pole center 12 can be suppressed. That is, by arranging the projection 31 in the middle of the adjacent magnetic pole centers 12 of the magnet portion 11, the effect of the weld line 6 on the magnetic pole center 12 can be suppressed.

In the above, an example has been described where the five gate connection portions 4 are provided for the 10-pole magnet. However, the present disclosure is not limited to this combination. FIG. 12 is a plan view illustrating another positional relationship between the gate connection portions 4, the magnetic pole centers 12, and the weld lines 6 of the magnet portion 11 of the permanent magnet rotor 10 according to the first embodiment. For example, as in FIG. 12, six gate connection portions 4 may be provided for 12-pole magnets. That is, the numbers of projections 31 and gate connection portions 4 are a half of the number of magnetic poles formed in the magnet portion 11, and it is sufficient that the projections 31 and the gate connection portions 4 be arranged at equal intervals in the middle of the adjacent magnetic pole centers 12.

In this way, the plurality of gate connection portions 4 as many as 1/2 of the number of magnetic poles of the permanent magnet rotor 10 is provided at equal intervals, and the magnetic field orientation of the mold is set such that the weld line 6 is positioned at the inter-pole 8 where the magnetic force is zero. Therefore, magnetic force distortion can be suppressed as much as possible. Furthermore, since the weld line 6 is positioned at the inter-pole 8 where the magnetic force is zero, it is possible to make a surface magnetic flux density distribution of the outer peripheral magnet 3 have a shape close to an ideal sine wave, and it is possible to reduce vibration noise of an electric motor.

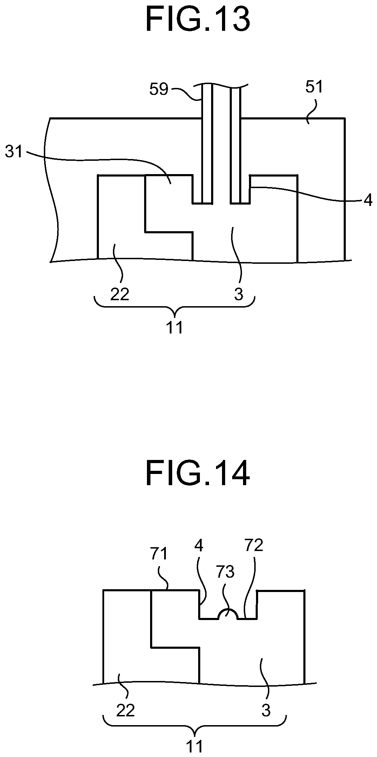

FIG. 13 is a cross-sectional diagram illustrating a state where a mold of the gate connection portion 4 of the permanent magnet rotor 10 according to the first embodiment is assembled. FIG. 14 is a cross-sectional diagram illustrating a state where the mold of the gate connection portion 4 of the permanent magnet rotor 10 according to the first embodiment is removed. A second gate 59 is provided in a second upper mold 51 illustrated in FIG. 13. When the second upper mold 51 in which the second gate 59 is provided is removed, a gate mark 73 that slightly swells from a mold surface 72 is formed at a position corresponding to the second gate 59. If the gate mark 73 swells higher than an upper end surface 71 of the magnet portion 11, it is not desirable as the product. Therefore, in the first embodiment, by providing the gate connection portion 4 recessed in the axial direction and connecting the second gate 59 to the gate connection portion 4, even if the gate mark 73 is generated, the gate mark 73 is prevented from swelling higher than the upper end surface 71 in the axial direction.

Note that shapes of the recess 24 of the inner peripheral magnet 2 and the projection 31 of the outer peripheral magnet 3 are not limited to the semicircular shape, and other shape such as a polygonal shape may be adopted. Furthermore, an entire shape of the inner peripheral magnet 2 may be a simple columnar shape.

As described above, according to the first embodiment, since the outer peripheral magnet 3 includes the plurality of projections 31 that projects toward the inner peripheral side and is fitted into the plurality of recesses 24 of the inner peripheral magnet 2, the bonding strength between the inner peripheral magnet 2 and the outer peripheral magnet 3 in the rotation direction can be improved. Furthermore, since the projection 31 and the recess 24 are fitted at the end portions in the axial direction, the tensile strength and drawing strength between the inner peripheral magnet 2 and the outer peripheral magnet 3 in the axial direction can be improved. Furthermore, since the plurality of gate connection portions 4 as many as a half of the number of magnetic poles of the permanent magnet rotor 10 is provided at equal intervals and the magnetic field orientation of the mold is set so that the weld line 6 is positioned at the inter-pole 8 where the magnetic force is zero, it is possible to make the surface magnetic flux density distribution of the outer peripheral magnet 3 have a shape close to an ideal sine wave, and it is possible to reduce the vibration noise of the electric motor.

### Second Embodiment.

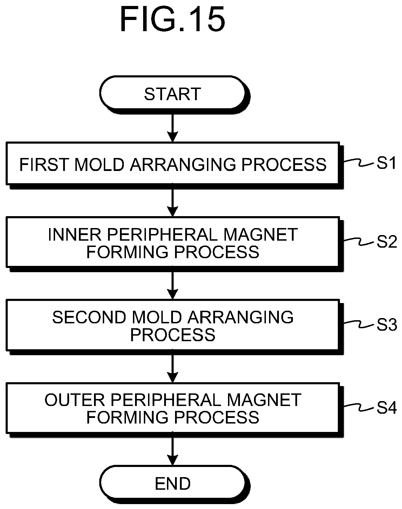

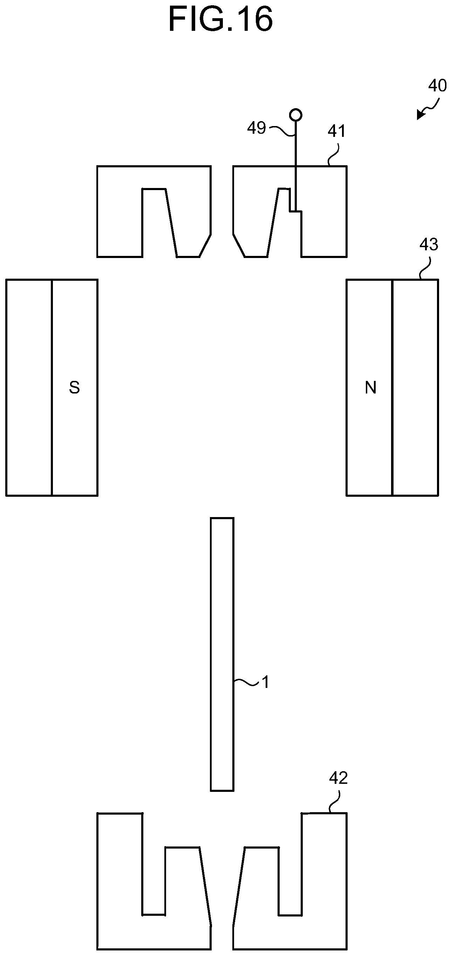

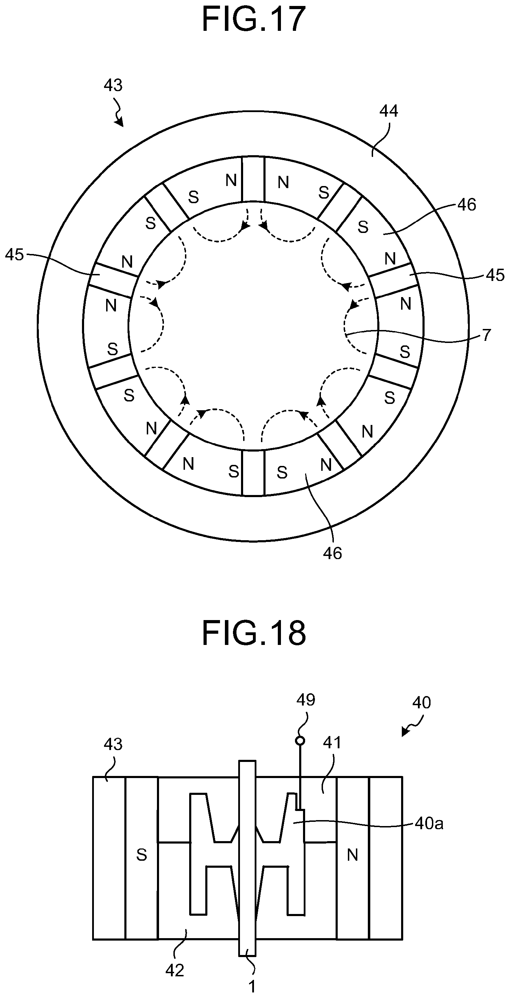

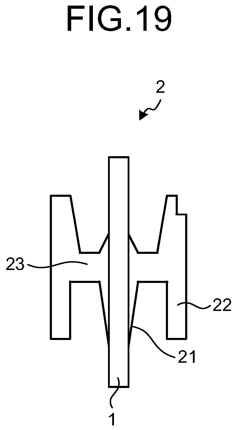

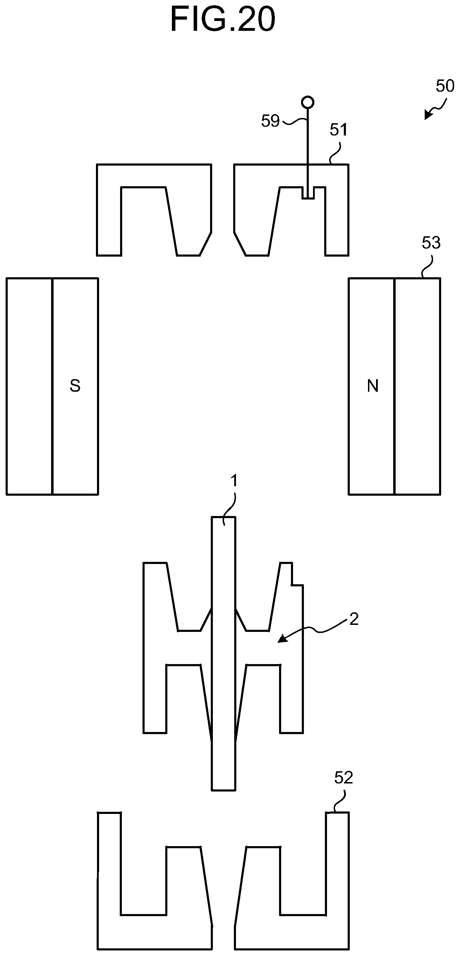

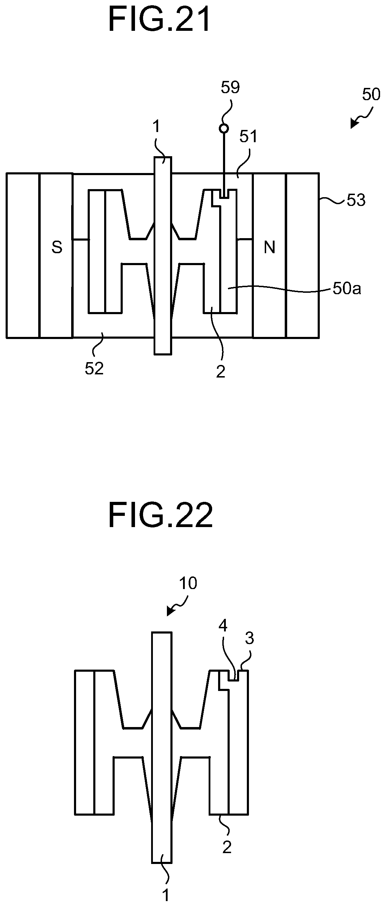

In a second embodiment, a method of manufacturing the permanent magnet rotor 10 will be described. FIG. 15 is a process diagram illustrating a process of manufacturing the permanent magnet rotor 10 in the second embodiment. FIG. 16 is a cross-sectional diagram illustrating a state where a first mold used in the manufacturing process in the second embodiment is disassembled. FIG. 17 is a plan view illustrating a first magnetic field orientation mold of the first mold according to the second embodiment. FIG. 18 is a cross-sectional diagram illustrating a state where the first mold used in the manufacturing process in the second embodiment is assembled. FIG. 19 is a cross-sectional diagram illustrating the inner peripheral magnet 2 manufactured by the first mold according to the second embodiment. FIG. 20 is a cross-sectional diagram illustrating a state where a second mold used in the manufacturing process in the second embodiment is disassembled. FIG. 21 is a cross-sectional diagram illustrating a state where the second mold used in the manufacturing process in the second embodiment is assembled. FIG. 22 is a cross-sectional diagram illustrating the outer peripheral magnet 3 manufactured by the second mold according to the second embodiment.

As illustrated in FIG. 22, the permanent magnet rotor 10 is manufactured by forming the inner peripheral magnet 2 around the rotation axis 1 and forming the outer peripheral magnet 3 on an outer periphery of the inner peripheral magnet 2.

### First mold arranging process (step S1)

As illustrated in FIG. 16, a first mold 40 includes a first upper mold 41 that has a first gate 49, a first lower mold 42, and a first magnetic field orientation mold 43. As illustrated in FIG. 17, the first magnetic field orientation mold 43 includes a cylindrical outer peripheral yoke 44, a plurality of tooth portions 45, and a plurality of magnetic field orientation magnets 46. A configuration of the first magnetic field orientation mold 43 is similar to that of the second magnetic field orientation mold 53 described with reference to FIG. 10, and redundant description is omitted. As illustrated in FIG. 18, a center hole of the first upper mold 41 and a center hole of the first lower mold 42 are inserted into the rotation axis 1, and a first space 40a surrounded by the first upper mold 41 and the first lower mold 42 is formed. The first magnetic field orientation mold 43 is arranged on an outer periphery of the first upper mold 41 and the first lower mold 42.

### Inner peripheral magnet forming process (step S2)

In a state where a magnetic field is formed in the first space 40a, a first magnetic resin material is injection-molded from the first gate 49 of the first upper mold 41. The first magnetic resin material is, for example, a ferrite bonded magnet material having anisotropy. As a result, as illustrated in FIG. 19, the anisotropic magnetic resin material is oriented in the direction of the magnetic line 7, and the inner peripheral magnet 2 magnetized so as to correspond to the shape of the first space 40a and the direction of the magnetic line formed by the magnetic field orientation magnet 46 is formed around the rotation axis 1.

### Second mold arranging process (step S3).

As illustrated in FIG. 20, a second mold 50 includes the second upper mold 51 that has the plurality of second gates 59, a second lower mold 52, and the second magnetic field orientation mold 53 illustrated in FIG. 10. As illustrated in FIG. 21, a center hole of the second upper mold 51 and a center hole of the second lower mold 52 are inserted into the inner peripheral magnet 2 holding the rotation axis 1, and a second space 50a surrounded by the second upper mold 51 and the second lower mold 52 is formed. The second magnetic field orientation mold 53 is arranged on an outer periphery of the second upper mold 51 and the second lower mold 52. The second magnetic field orientation mold 53 has a similar shape to and the same number of magnetic poles as the first magnetic field orientation mold 43. At this time, positioning in the rotation direction is performed by a positioning unit (not illustrated) so that the magnetic pole center 12 formed in the inner peripheral magnet 2 by the first magnetic field orientation mold 43 matches the magnetic pole center 12 formed by the second magnetic field orientation mold 53. Furthermore, as described in the first embodiment, the plurality of gate connection portions 4 as many as a half of the number of magnetic poles of the permanent magnet rotor 10 is provided at equal intervals, and the magnetic field orientation of the second magnetic field orientation mold 53 is set such that the weld line 6 is positioned at the inter-pole 8 where the magnetic force is zero.

### Outer peripheral magnet forming process (step S4)

In a state where a magnetic field is formed in the second space 50a, a second magnetic resin material is injection-molded from the plurality of second gates 59 of the second upper mold 51. The second magnetic resin material is, for example, a rare earth bonded magnet material having anisotropy. As a result, the second magnetic resin material is injected from the plurality of gate connection portions 4 into the second space 50a. Therefore, as illustrated in FIG. 22, the anisotropic magnetic resin material is oriented in the direction of the magnetic line 7, the outer peripheral magnet 3 magnetized so as to correspond to the shape of the second space 50a and the direction of the magnetic line formed by the magnetic field orientation magnet 56 is formed on the outer periphery of the inner peripheral magnet 2, and the permanent magnet rotor 10 is completed.

According to the second embodiment, since the plurality of gate connection portions 4 as many as a half of the number of magnetic poles of the permanent magnet rotor 10 is provided at equal intervals and the magnetic field orientation of the second magnetic field orientation mold 53 is set so that the weld line 6 is positioned at the inter-pole 8 where the magnetic force is zero, it is possible to make the surface magnetic flux density distribution of the outer peripheral magnet 3 have a shape close to an ideal sine wave, and it is possible to reduce the vibration noise of the electric motor.

The configurations illustrated in the above embodiments indicate exemplary contents of the present disclosure and can be combined with other known technique. Further, the configurations illustrated in the embodiments can be partially omitted and changed without departing from the scope of the present disclosure.

### Reference Signs List

1 rotation axis; 2 inner peripheral magnet; 3 outer peripheral magnet; 4 gate connection portion; 6 weld line; 7 magnetic line; 8 inter-pole; 10 permanent magnet rotor; 11 magnet portion; 12 magnetic pole center; 21 axis holding portion; 22 magnetic force portion; 23 connection portion; 24 recess; 31 projection; 40 first mold; 40a first space; 41 first upper mold; 42 first lower mold; 43 first magnetic field orientation mold; 44, 54 outer peripheral yoke; 45, 55 tooth portion; 46, 56 magnetic field orientation magnet; 49 first gate; 50 second mold; 50a second space; 51 second upper mold; 52 second lower mold; 53 second magnetic field orientation mold; 59 second gate; 71 upper end surface; 72 mold surface; 73 gate mark.

## Claims

1. A permanent magnet rotor comprising:
a rotation axis;
an inner peripheral magnet that is a cylindrical bonded magnet including a plurality of recesses on an outer peripheral side and holding the rotation axis; and
an outer peripheral magnet that is a cylindrical bonded magnet provided on an outer peripheral side of the inner peripheral magnet, wherein
the outer peripheral magnet includes
a plurality of projections that projects toward an inner peripheral side and is fitted into the plurality of recesses of the inner peripheral magnet.

2. The permanent magnet rotor according to claim 1, wherein
the plurality of recesses is provided only at one end portion of the inner peripheral magnet in an axial direction, and
the plurality of projections is provided only at one end portion of the outer peripheral magnet in the axial direction.

3. The permanent magnet rotor according to claim 1 or 2, wherein the plurality of recesses and the plurality of projections have a semicircular shape.

4. The permanent magnet rotor according to any one of claims 1 to 3, wherein the number of the plurality of projections is a half of the number of magnetic poles formed in the inner peripheral magnet and the outer peripheral magnet, and the plurality of projections is arranged at equal intervals in the middle of adjacent magnetic pole centers.

5. The permanent magnet rotor according to any one of claims 1 to 4, wherein the outer peripheral magnet includes a gate connection portion recessed from an end surface of one end portion of the outer peripheral magnet, at a position in a circumferential direction where the plurality of projections is provided.

6. A method of manufacturing a permanent magnet rotor, the method comprising:
a process of arranging a first upper mold, a first lower mold, and a first magnetic field orientation mold used to form an inner peripheral magnet that is a bonded magnet including a plurality of recesses on an outer peripheral side, around a rotation axis ;
a process of forming the inner peripheral magnet that holds the rotation axis by injection-molding a first magnetic resin material in a first space surrounded by the first upper mold, the first lower mold, and the first magnetic field orientation mold;
a process of arranging a second upper mold, a second lower mold, and a second magnetic field orientation mold used to form an outer peripheral magnet that is a bonded magnet including a plurality of projections that projects toward an inner peripheral side and is fitted into the plurality of recesses of the inner peripheral magnet, around the inner peripheral magnet; and
a process of forming the outer peripheral magnet on an outer side of the inner peripheral magnet that holds the rotation axis by injection-molding a second magnetic resin material in a second space surrounded by the second upper mold, the second lower mold, and the second magnetic field orientation mold, wherein
in the process of injection-molding the second magnetic resin material, the second magnetic resin material is injected from a gate connection portion provided at a circumferential direction position where the plurality of recesses is formed.
